# EUROPEAN PATENT APPLICATION

(11) **EP 2 312 232 A2**
(43) Date of publication of application: **20.04.2011**
(21) Application number: 10013289.3
(22) Date of filing: 04.10.2010
(51) Int. Cl.: F24J 2/02, F24J 2/14

(54) **Solar barbecue**

(30) Priority: 08.10.2009 IT FI20090063 U
(71) Applicant: GRAFFITI BY RAL 92 S.R.L., Siena (IT)
(72) Inventor: Rocchi, Gianni, 53036 Poggibonsi Siena (IT)
(74) Representative: Nesti, Antonio

(57) **Abstract**

A solar barbecue, comprising:
a reflecting surface (1) with parabolic geometry;
a support (2) for arranging along the focus (F) of the parabola food to be cooked (3) exposed directly to solar radiation (R), concentrated by said parabolic surface. The parabolic reflecting surface (1) is constituted by at least one flexible lamina (1), positioned in continuous linear guides (4) with curved parabolic geometry.

## Description

### Field of invention

The invention relates to a barbecue for cooking meat and food in general. More in particular a barbecue is described that uses concentrated solar radiation for cooking.

### Background art

Currently known are traditional barbecues or grills that function with coal, gas, or electrical energy, which, however, present the drawback of requiring a supply of a fuel (coal or gas) and hence depend upon the availability of these, or else require availability of an electric-power network.

Furthermore, gas-fired or coal-fired barbecues involve a combustion that is not always compatible with the place where the barbecue is used for reasons of safety or of disturbance to the surrounding environment, for example on account of the production of smoke.

Moreover known are devices that exploit the sun as source of energy for heating cooking containers into which the food is introduced.

These devices are, however, far from efficient from the energy standpoint and do not enable direct cooking of the food.

From the document No. US2008041365 there is moreover known a foldable solar-energy grill made up of a parabolic reflecting sheet supported by sides made of cardboard and in which the food to be cooked is generally arranged along the focus of the parabola.

Said known device presents certain drawbacks linked to the low precision that can be achieved and to the non-optimal exploitation of the reflecting surface available, said factors adversely affecting the quality and repeatability of the cooking that can be achieved using the grill.

### Aim of invention

The aim of the present invention is to overcome the drawbacks of the solutions already known and propose a solar barbecue that will guarantee a more effective cooking as regards accuracy and exploitation of the solar irradiation available.

### Summary of invention

The above purposes have been achieved by providing a solar-energy barbecue according to the annexed claims.

A first advantage of the invention consists in the higher quality of cooking that can be achieved.

A second advantage lies in the possibility of adjusting precisely the position of the reflecting surface and of the food with respect to the position of the sun.

A third advantage consists in the ease of use and transportability.

### List of drawings

The above and further advantages will be better understood by a person skilled in the branch from the ensuing description and from the annexed drawings, which are provided purely by way of non-limiting example and in which:

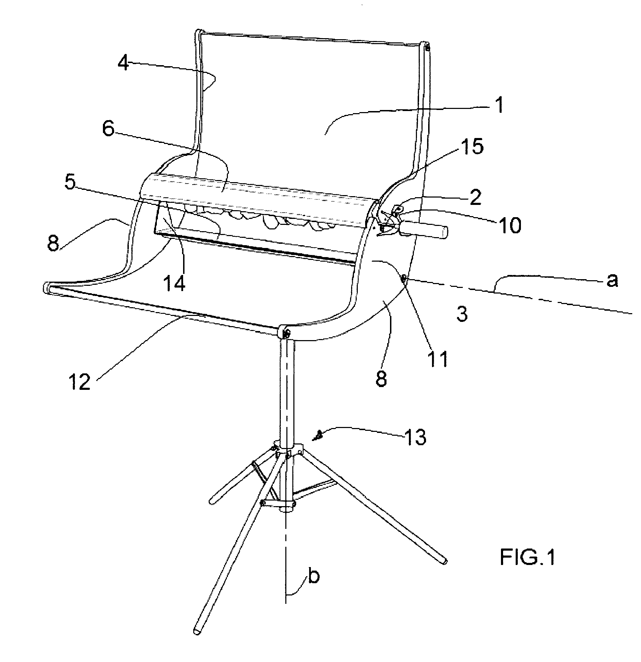

- Figure 1 shows an overall perspective view of a solar barbecue according to the invention;

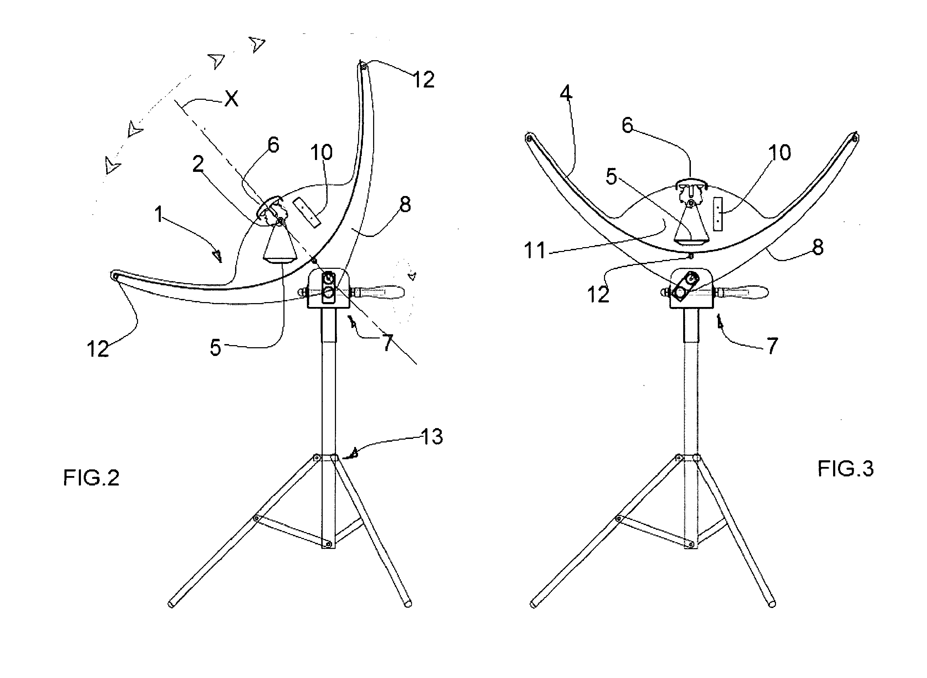

- Figure 2 and 3 show respectively a side view of the barbecue of Figure 1 in two different positions with respect to the sun with highlighted the position of the food being cooked;

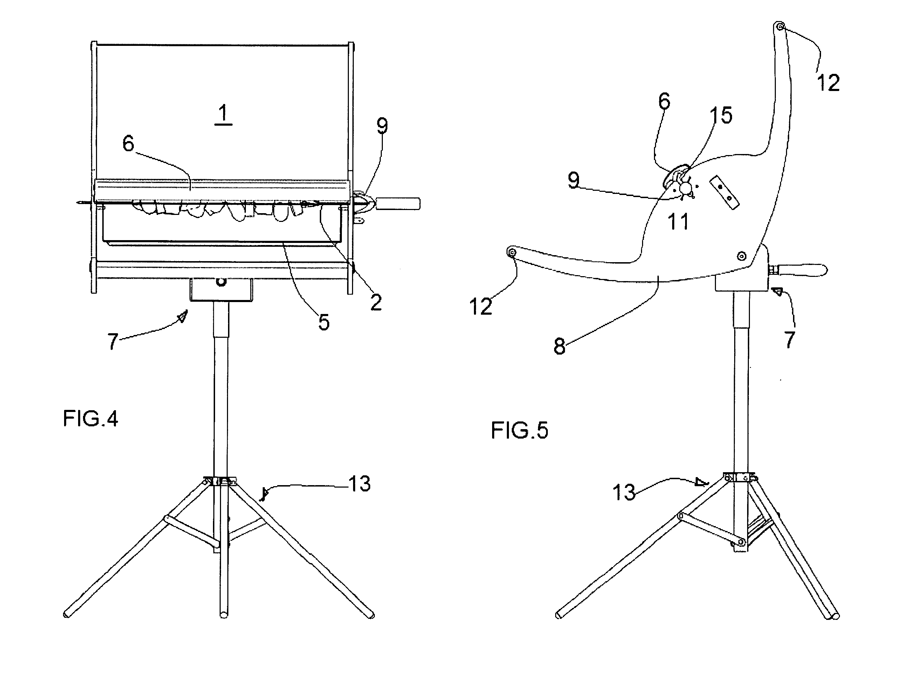

- Figure 4 is a front view of the barbecue of Figure 1;
- Figure 5 is a side view of the barbecue of Figure 1;

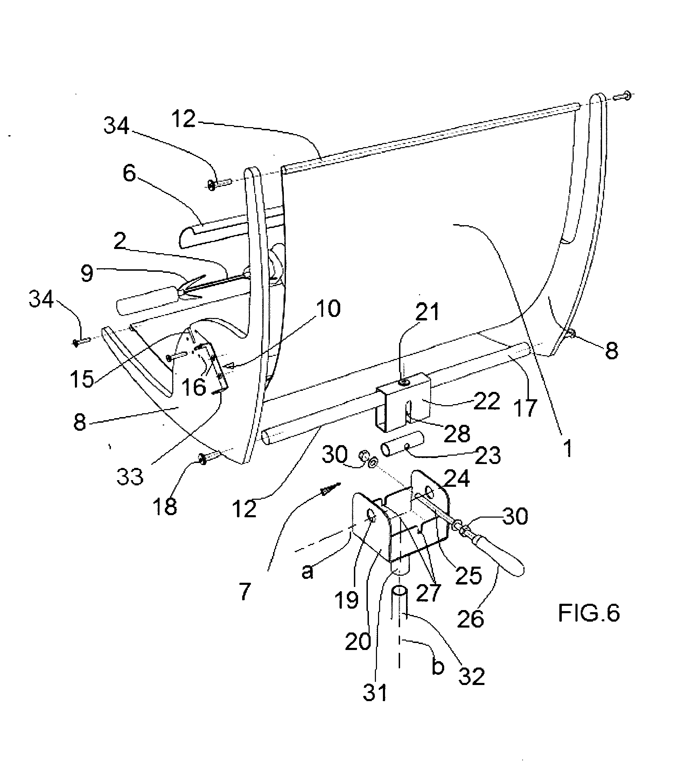

- Figure 6 is an exploded view of the barbecue;

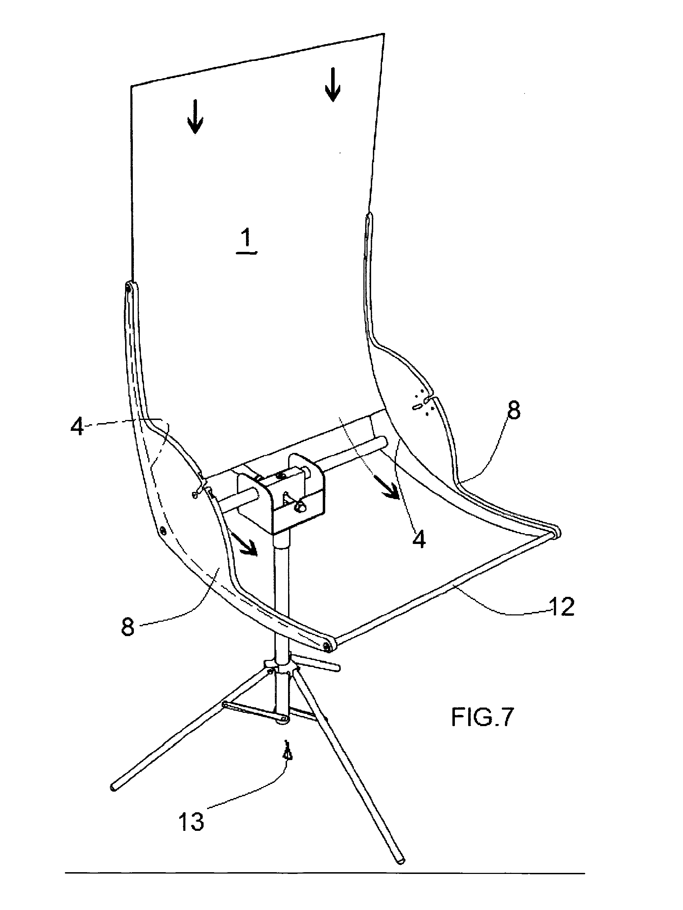

- Figure 7 shows the guided insertion of the reflecting surface in the barbecue of Figure 1; and

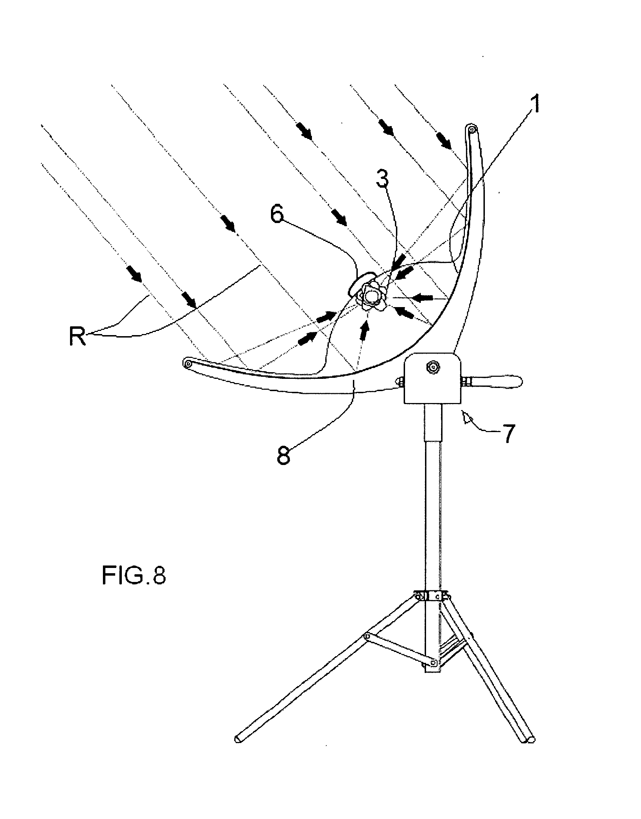

- Figure 8 is a schematic illustration of the solar irradiation of the barbecue in use.

### Detailed description

With reference to the drawings, a solar barbecue according to the invention comprises a reflecting surface 1 with parabolic geometry and a support 2, for example a spit, for arranging along the focus F of the parabola food to be cooked 3 exposed to solar radiation R, concentrated by said parabolic surface and reflected towards the line of the focus F.

According to the invention, the reflecting surface 1 is constituted by a flexible lamina 1 preferably obtained from an extruded silvered plastic sheet of PMMA (polymethylmethacrylate), which normally, i.e., if it is not subject to external deformations, has a plane linear geometry.

In the assembly of the barbecue, a pair of sides 8 are mounted parallel to one another by means of spacer rods 12 fixed to said sides by means of screws 34 to keep them stably at a predetermined distance corresponding to the width of the lamina 1.

The lamina 1 is then inserted unremovably along a pair of linear guides 4 made on the internal faces of the sides 8 and substantially having a continuous curved parabolic shape, so conceived in order to keep the lamina stably in position and with a high degree of precision with respect to the theoretical parabolic profile.

It may be noted that, even though in the example described the lamina 1 is made of a single piece, in other preferred embodiments the laminas inserted in the guides 4 can be two or more in order to facilitate dismantling and transport thereof.

Once the lamina 1 has been positioned, the spit 2 is filled with food 3 and housed on slots 15 of the sides 8 so as to be aligned with the focus F.

In use, the solar radiation R impinges upon the lamina 1 and is reflected and concentrated along the line of focus F so that it reaches the food 3, which is brought to a cooking temperature that can range approximately between 150°C and 240°C.

According to the invention, there may moreover be provided a transparent collection tray 5 set rocking underneath the support 2, being suspended from this by means of lateral shoulders 14. With this arrangement, the entire reflecting surface is exploited and at the same time any grease or other liquids emitted during cooking of the food are prevented from dirtying the underlying lamina.

During cooking, the support 2 can moreover be turned with respect to the axis of the focus to expose different portions to irradiation.

Advantageously, the angular position of the spit 2 can be adjusted via a fork 9, which is fixed with respect to the spit and can be inserted in corresponding holes 16 made on the sides 8 so as to position the spit in at least three different angular positions spaced, for example, 120° apart.

In this way, it has been found experimentally that with at the most three positions it is possible to expose the entire surface of the food to the concentrated radiation, which in the example described defines a cone of irradiation with vertex in the focus F and an angle of aperture of approximately 210°.

Preferably, one side 8 can be pre-arranged for supporting a battery-driven roasting jack applied on the spit 2.

The barbecue of the invention further comprises a supporting and orienting mechanism 7 set underneath the lamina 1 in order to regulate the position of the reflecting surface with respect to the position of the sun.

Advantageously, the mechanism 7 is devised for adjustment according to at least two axes a, b, of which one axis a is parallel to the longitudinal axis of the parabolic reflecting surface.

In greater detail, the mechanism 7 comprises a rod 17, which is fixed by means of screws 18 to the sides 8 and rotates in a pair of holes 19 made in the lateral part of a first box section 20 open at the top.

The rod 17 is fixed, for example by means of screws 21 to a sectional element 22, which in use remains within the box section 20 and within which there can be inserted, in a way slidable in height, a cylinder 23 provided with a through internal thread 24.

Within the thread 24 there can be inserted a threaded pin 25, which can be operated from outside via a knob 26 and housed in slots 27 of the box section 20 and 28 of the sectional element 22.

During assembly, the cylinder 23 is inserted in the sectional element 22, and this is in turn inserted in the box section 20.

The rod 17 is then passed through the holes 19 and through the sectional element 22 and is fixed to this with the screw 21 and to the sides 8 with the screws 18.

Next, the pin 25 is screwed approximately for one half in the thread 24 through the slot 28, and then inserted in the slots 27 of the box section 20, to which it is fixed longitudinally with corresponding detents, for example bolts 30, that can be screwed on the threaded pin 25.

Once the assembly 7 has been mounted, the rod 17, and hence the reflecting surface 1, can turn about the axis a of the holes 19 simply by screwing/unscrewing the pin 25 and then displacing the threaded cylinder 23, which causes oscillation of the sectional element 20 and hence rotation of the rod 17.

Preferably, the assembly 7 is provided with a pin 31 that can be applied in a rotating way on an upright 32 of the base 13 of the barbecue.

With this solution, the rotations on the axis a and with respect to the axis b, controlled via the single knob 26 enable tracking of the position of the sun according to the time of day and the period of the year, and hence optimal choice of the position of the reflecting surface.

Advantageously, the optimal position can moreover be indicated thanks to an aligner 10, which can be used for orienting the reflecting surface in a position of maximum exposure.

In the example described, the aligner 10 comprises a U-shaped element fixed to at least one side 8 and provided with lamellae 33 emerging from the side 8 so as to be able to function as alignment finder in regard to the incident solar radiation.

Preferably, the base 13 of the barbecue is a foldable three-legged support that enables manageability, stability of resting on any terrain, and ease of transport, but it is understood that different types of base may be used.

According to a further aspect of the invention, it has been envisaged to arrange on top of the support 2 a lid 6 for covering the food and for limiting the dispersion of heat, said lid being preferably made of a transparent colour so that it is possible to check how cooking is proceeding.

For the same purpose lateral shieldings 11 are moreover provided, preferably integrated with the structure of the sides 8.

The present invention has been described according to a preferred embodiment, but equivalent variants can be devised without thereby departing from the sphere of protection of the invention.

## Claims

1. A solar barbecue, comprising
a reflecting surface (1) with parabolic geometry,
a support (2) for arranging along the focus (F) of the parabola food to be cooked (3) exposed directly to solar radiation (R), concentrated by said parabolic surface,
said barbecue being **characterized in that** said reflecting surface is constituted by at least one flexible lamina (1) normally with plane linear geometry and **in that** it comprises substantially continuous linear guides (4) with curved parabolic geometry, for inserting and holding said lamina (1) in position in a parabolic conformation of use.

2. The barbecue according to Claim 1, comprising a transparent collection tray (5) set rocking underneath the support (2).

3. The barbecue according to Claim 1 or Claim 2, **characterized in that** it comprises a transparent lid (6) for covering the food, set on top of the support (2).

4. The barbecue according to any one of the preceding claims, comprising supporting and orienting means (7) for continuous angular adjustment of the position of the surface (1) according to at least two axes (a, b) of which one axis (a) is parallel to the longitudinal axis of the parabolic reflecting surface.

5. The barbecue according to any one of the preceding claims, comprising sides (8) set alongside said lamina (1) and provided with said linear guides (4).

6. The barbecue according to any one of the preceding claims, within said sides (8) comprise a lateral shielding surface (11) for containment of the heat.

7. The barbecue according to any one of the preceding claims, comprising an arrangement of spacer rods (12) fixed to said sides (8) to keep them stably at a predetermined distance.

8. The barbecue according to any one of the preceding claims, comprising means (9) for rotating in an adjustable way the position of the support (2) with respect to the axis of the focus (F).

9. The barbecue according to any one of the preceding claims, comprising a battery-driven roasting jack applied to the spit (2).

10. The barbecue according to any one of the preceding claims, comprising means (10) for orienting the reflecting surface in a position of maximum exposure of the reflecting surface with respect to the direction of solar irradiation.

11. The barbecue according to any one of the preceding claims, comprising a three-legged foldable supporting base (11).

12. The barbecue according to any one of the preceding claims, wherein said lamina is a lamina with silvered mirror made of extruded polymethylmethacrylate.
